# EUROPEAN PATENT APPLICATION

(11) **EP 2 560 274 A2**
(43) Date of publication of application: **20.02.2013**
(21) Application number: 12005723.7
(22) Date of filing: 07.08.2012
(51) Int. Cl.: H02M 7/00, H01G 7/04

(54) **Capacitor circuit utilising capacitors with temperautre variable capacity in a converter and charging/discharging method**

(30) Priority: 19.08.2011 JP 2011179498
(71) Applicant: Hitachi, Ltd., Tokyo 100-8280 (JP)
(72) Inventor: Goto, Kengo, Chiyoda-ku Tokyo 100-8220 (JP); Ochi, Kentaro, Chiyoda-ku Tokyo 100-8220 (JP); Kato, Shuji, Chiyoda-ku Tokyo 100-8220 (JP)
(74) Representative: Strehl Schübel-Hopf & Partner

(57) **Abstract**

The present invention intends to adjust balance of currents of capacitors (2) connected in parallel and a capacitor circuit (1) is provided in which a plurality of capacitors (2) having identical normalized capacitance and each having an electrostatic capacity which decreases as the temperature rises are connected in parallel. A power converter (100c; 100b; 100c) is also provided which uses the capacitor circuit (1) as a DC capacitor circuit (104) for smoothing ripples in current amount supplied from a DC power source (101), a filter capacitor circuit (106) adapted to impose band limitation on a particular frequency and/or a snubber capacitor circuit (110) adapted to snub a transient high voltage generated during cutoff of current.

## Description

### BACKGROUND OF THE INVENTION

The present invention relates to a technique for a capacitor circuit capable of adjusting current balance and a converter to which the capacitor circuit is applied.

A converter employing high-speed semiconductor switching elements such as insulated gate bipolar transistors (IGBT's) has been used in various fields. With semiconductor technologies advanced in recent years, a semiconductor module employing elements to switch each having large capacities of withstand voltage and withstand current has been materialized. This leads also to widespread use of a semiconductor module which makes integral a pair of semiconductor switching elements on positive and negative sides constituting upper and lower arms, respectively, of one phase of conversion of electric power for frequency/voltage variable loads.

Further, in order to make large capacities of withstand voltage and withstand current the switching element has, a plurality of semiconductor modules are sometimes connected in parallel and in such an instance, a problem of equalization of currents the respective semiconductor modules share arises. The power converter employing the switching element has a capacitor adapted for smoothing. Then, in a converter comprised of a plurality of capacitors, a current supplied through a particular capacitor is biased depending on the arrangement and connection condition of the capacitors. A ripple current supplied from a capacitor is determined by a capacitance of the capacitor and when the ripple current from a particular capacitor is to be increased, the capacitance of the capacitor needs to be increased and there is a possibility that the cost and size of the overall device will increase. In addition, when a biased current is supplied to a particular capacitor, an overcurrent passes through the capacitor to cause it to increase in temperature, possibly having an influence upon the lifetime of the switching element.

To solve the above problems, in a converter disclosed in JP-A-2009-296727 (Patent Document 1), a connection member for connection of a capacitor and a switching element is split to increase its parasitic inductance and by adjusting the parasitic inductance, the amount of currents passed to the capacitor is adjusted so that currents of a plurality of capacitors connected in parallel may be balanced.

In a capacitor circuit device disclosed in JP-A-2000-82635 (Patent Document 2), a first conductor is connected to an electrode of one of capacitors connected in parallel with each other and a second conductor is connected to an electrode of the other capacitor, so that a dispersion of currents shared by the capacitors can be decreased.

### SUMMARY OF THE INVENTION

In the techniques described in Patent Documents 1 and 2, the connection member is split and the conductor is connected, giving rise to a problem that the device becomes complicated and the number of working processes increases. Further, when because of manufacture dispersion of capacitor elements, their electrostatic capacities differ from one another, the current balance in the device is aggravated to disadvantage. In addition, inductances of a plurality of current paths have each a value complying with a path undergoing a large amount of current, with the result that the whole inductance increases disadvantageously, followed by an increase in surge voltage.

In the light of the disadvantages of related arts, the present invention has been made by having an object of adjusting balance of currents passed through capacitors connected in parallel.

To achieve the above object, according to the present invention, a plurality of capacitors each having an identical normalized capacitance which decrease in electrostatic capacity as the temperature rises are connected in parallel.

According to the present invention, current balance among the capacitors connected in parallel can be adjusted.

### BRIEF DESECRIPTION OF THE DRAWINGS

FIG. 1A is a circuit diagram of a capacitor circuit according to the present embodiment.
FIG. 1B is a graph illustrative of characteristics of a capacitor.
FIG. 2 is a circuit diagram useful to explain operation of the capacitor circuit.
FIG. 3 is a circuit diagram illustrating an example of arrangement of capacitors in the capacitor circuit.
FIG. 4 is a circuit diagram illustrating a first example of construction of a converter according to the present embodiment.
FIG. 5 is a circuit diagram illustrating a second example of construction of the converter according to the present embodiment.
FIG. 6 is a circuit diagram illustrating a third example of construction of the converter according to the present embodiment.

### DESCRIPTION OF THE EMBODIMENT

An embodiment of the present invention will now be described in greater detail with reference to the accompanying drawings.

### [Capacitor Circuit]

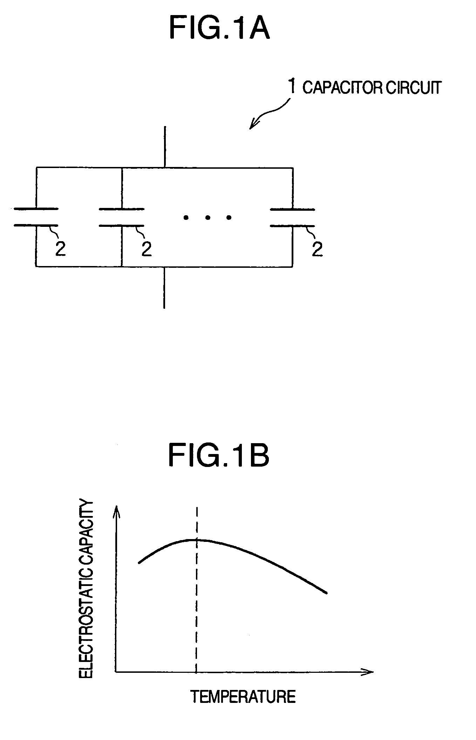

Referring to Figs. 1A and 1B, an example of construction of a capacitor circuit according to the present embodiment and characteristics of a capacitor will be described.

As shown in Fig. 1A, a plurality of capacitors 2 having identical normalized capacitance are connected in parallel in a capacitor circuit 1 according to the present embodiment. The number of capacitors 2 may be two or any greater than two. The identical normalized capacitance suggests that even capacitors subject to manufacture dispersion are on sale as being of the same electrostatic capacity.

The capacitor 2 used in the capacitor circuit 1 according to the present embodiment has characteristics defined by a low temperature region (on the left side of dotted-line boundary) and a high temperature region (on the right side of dotted-line boundary) in which the gradients of electrostatic capacity to temperature are positive and negative, respectively, as shown in Fig. 1B.

The region the capacitor circuit 1 according to the present embodiment uses is limited to the high temperature region only. In other words, the capacitor 2 used in the capacitor circuit 1 according to the present embodiment has such characteristics that as the temperature rises in the use region (high temperature region), the electrostatic capacity decreases.

Available as the capacitor 2 having the characteristics shown in Fig. 1B are many kinds of capacitors inclusive of ceramic capacitors.

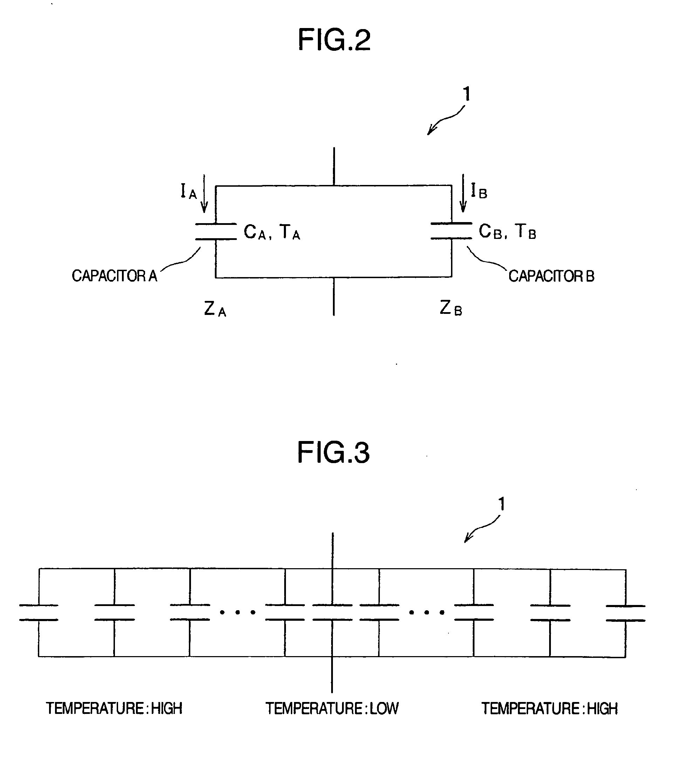

Turning now to Fig. 2, how the amounts of currents in the capacitor circuit 1 according to the present embodiment change will be described.

An example will be explained herein where two capacitors having identical normalized capacitance but having their electrostatic capacities undergoing manufacture dispersion are connected in parallel. A capacitor A has an electrostatic capacity C_{A}, an impedance Z_{A}, a current amount I_{A} and a temperature T_{A} and a capacitor B has an electrostatic capacity C_{B}, an impedance Z_{B}, a current amount I_{B} and a temperature T_{B}.

Assumptively, because of the manufacture dispersion, C_{A} > C_{B} stands between the electrostatic capacities of two capacitors 2 (capacitors A and B).

Then, since the impedance of capacitor 2 is indicated by 1/(ωC), Z_{A} < Z_{B} is obtained. Accordingly, I_{A} > I_{B} stands. Under this condition, a current larger than that for the capacitor "B" flows through the capacitor "A" which in turn rises in temperature. Consequently, according to the characteristics shown in Fig. 1B, the electrostatic capacity C_{A} of capacitor "A" decreases, so that the impedance Z_{A} of capacitor "A" increases and its current amount I_{A} decreases.

As the current amount I_{B} of the capacitor "B" increases on the other hand, its temperature rises and its electrostatic capacity C_{B} decreases according to the characteristics shown in Fig. 1B, so that its current amount I_{B} deceases.

By repeating the above operation, amounts of currents flowing through the capacitors "A and B" can be equalized.

### [Example of Capacitor Arrangement]

An example of arrangement of capacitors in the capacitor circuit according to the present embodiment is illustrated in Fig. 3.

For example, in a device in which the capacitor circuit 1 is installed, the capacitors 2 are arranged thin at a site where the temperature is expected to rise and they are arranged thick at a site where the temperature is expected to lower, as shown in Fig. 3.

The characteristics of capacitor circuit 1 as explained with reference to Fig. 1B can be applicable to the case where temperatures in an ambience in which the capacitors are installed are close to one another.

Accordingly, by arranging the capacitors 2 as shown in Fig. 3, the temperatures in the ambience in which the capacitors are installed can be close to one another and the characteristics of capacitor circuit 1 as explained in connection with Fig. 1B can be applied.

### [Electric Power Converter]

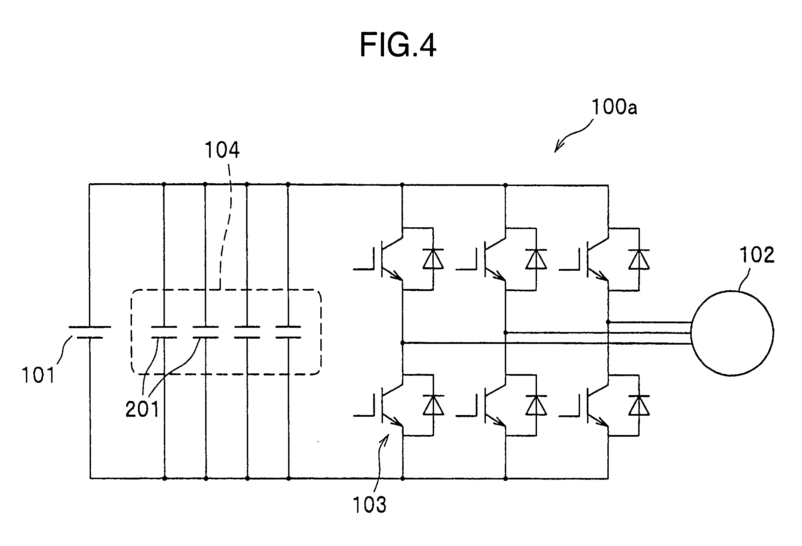

Next, by making reference to Figs. 4 to 6, an example will be described in which the capacitor circuit 1 according to the present embodiment is applied to an electric power converter adapted to convert direct current to alternating current.

An electric power converter 100a in Fig. 4 is connected to a DC power source 101 for supplying direct electric power and to a load 102. The converter 100a comprises elements to switch 103 for switching direct current supplied from the DC power source 101 to alternating current, and a DC capacitor circuit 104 connected in parallel to the DC power source 101 and adapted for smoothing ripples in a current amount supplied from the DC power source 101. Here, in the DC capacitor circuit 104, DC capacitors 201 each having characteristics as shown in Fig. 1B are connected in parallel. In other words, the DC capacitor circuit 104 corresponds to the capacitor circuit 1 as shown in Fig. 1A.

According to the converter 100a shown in Fig. 4, even when a dispersion occurs in current balance in the individual DC capacitors 201 constituting the DC capacitor circuit 104, the impedance of a capacitor to which currents concentrate increases pursuant to the characteristics shown in Fig. 1B. Concomitantly therewith, the current amount decreases and therefore, the converter 100a can stabilize the current balance in each of the DC capacitors 201 without resort to complicated control and package structure.

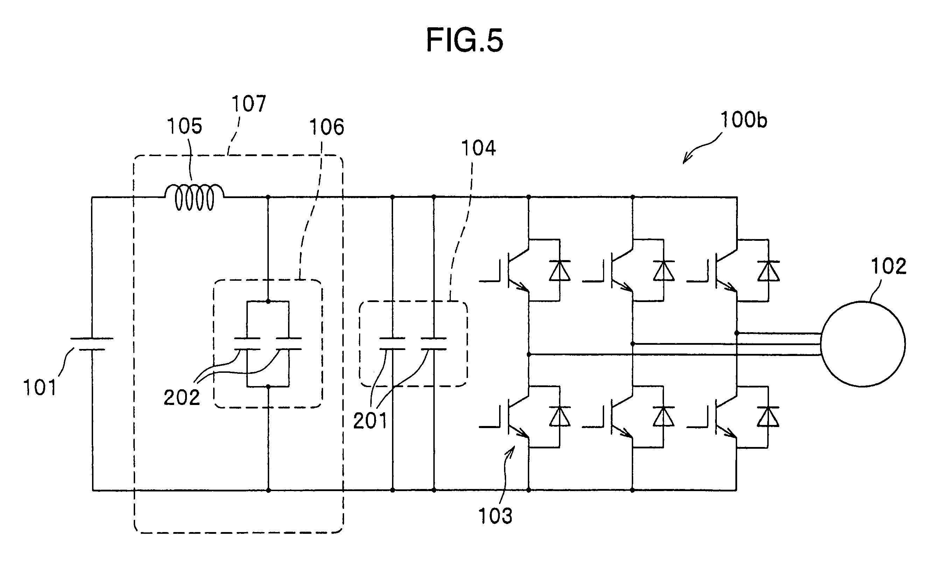

Turning to Fig. 5, an electric power converter 100b is connected to the DC power source 101 for supplying direct electric power and to the load 102. The converter 100b comprises elements to switch 103 for switching direct current supplied from the DC power source 101 to alternating current, and a DC capacitor circuit 104 connected in parallel to the DC power source 101 and adapted for smoothing ripples in a current amount supplied from the DC power source 101. The converter 100b further comprises a filter circuit 107 for imposing band limitation on a particular frequency or for extracting the particular frequency. The filter circuit 107 exemplified in Fig. 5 includes an inductance 105 connected in series with the DC power source 101 and a filter capacitor circuit 106 connected in parallel with the DC power source 101.

Here, in the DC capacitor circuit 104, DC capacitors 201 each having characteristics as shown in Fig. 1B are connected in parallel. Also, in the filter capacitor circuit 106, filter capacitors 202 each having characteristics as shown in Fig. 1B are connected in parallel. In other words, each of the DC capacitor circuit 104 and filter capacitor circuit 106 corresponds to the capacitor circuit 1 as shown in Fig. 1A.

According to the converter 100b as shown in Fig. 5, even when a dispersion occurs in current balance in the individual sets of DC capacitors 201 and of DC capacitors 202 constituting the DC capacitor circuit 104 and the filter capacitor circuit 106, respectively, the impedances of capacitors 201 and 202 to which currents concentrate increases pursuant to the characteristics shown in Fig. 1B. Concomitantly therewith, the current amount decreases and therefore, the converter 100b can stabilize the current balance in the individual sets of DC capacitors 201 and of DC capacitors 202 without resort to complicated control and package structure. In connection with Fig. 5, the description is given by way of example of the normal filter circuit but provided that the circuit 107 is for filtering, this construction is not limitative.

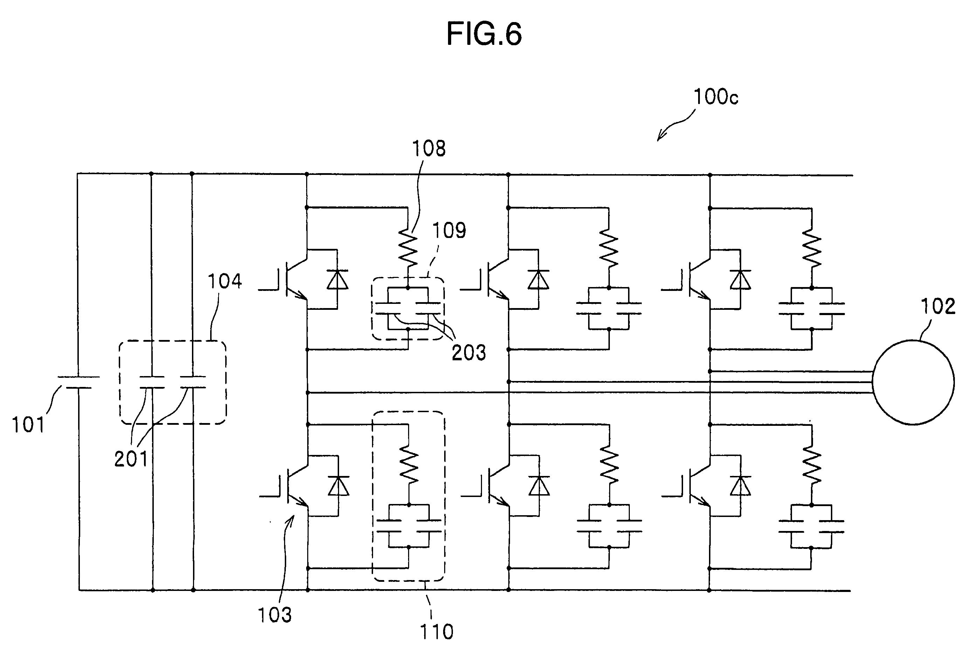

Turning to Fig. 6, a power converter 100c is connected with the DC power source 101 for supplying direct electric power and with the load 102. The power converter 100c comprises elements to switch 103 for switching direct current supplied from the DC power source 101 to alternating current and a DC capacitor circuit 104 connected in parallel to the DC power source 101 and adapted for smoothing ripples in a current amount supplied from the DC power source 101. The converter 100c further comprises snubber circuits 110 for snubbing a transient high voltage generated upon cutoff of current. Each of the snubber circuits 110 includes a snubber resistor 108 and a snubber capacitor circuit 109 which are connected in parallel to each of the switching elements 103.

Here, in the DC capacitor circuit 104, DC capacitors 201 each having characteristics as shown in Fig. 1B are connected in parallel. Then, in the snubber capacitor circuit 109, snubber capacitors 203 each having characteristics as shown in Fig. 1B are connected in parallel. In other words, each of the DC capacitor circuit 104 and snubber capacitor circuit 109 corresponds to the capacitor circuit 1 shown in Fig. 1A.

According to the converter 100c as shown in Fig. 6, even when a dispersion occurs in current balance in the individual sets of DC capacitors 201 and 203 constituting the DC capacitor circuit 104 and the snubber capacitor circuit 109, respectively, the impedances of capacitors 201 and 203 to which currents concentrate increases pursuant to the characteristics shown in Fig. 1B. Concomitantly therewith, the current amount decreases and therefore, the converter 100c can stabilize the current balance in the individual sets of capacitors 201 and 203 without resort to complicated control and package structure.

In connection with Fig. 6, the description is given by way of example of the RC snubber of snubber circuit 110 constituted by the snubber resistor 108 and snubber capacitor circuit 109 but provided that this circuit 110 is a snubber circuit, the construction of the snubber circuit is not limited to the illustrated circuit. To add, the converter 100c may have the filter circuit 107 as shown in Fig. 5 and conversely, the converter 100b may have the snubber circuit 110 as shown in Fig. 6.

The present embodiment has been described by way of example where the capacitor circuit as shown in Fig. 1 is applied to the power converters 100a to 100c but this is not limitative and provided that the circuit uses the capacitors each having the characteristics of Fig. 1B and connected in parallel, application of the capacitor circuit 1 according to the present embodiment is possible.

Further, in the converter 100b in Fig. 5 and the converter 100c in Fig. 6, the DC capacitor circuit 104 may be omitted.

Alternatively, the converter 100a in Fig. 4 may comprise the filter circuit 107 of Fig. 5 and the snubber circuit 110 of Fig. 6.

According to the capacitor circuit 1 of the present embodiment, the electrostatic capacity of the capacitor decreases as the temperature rises. Concomitantly therewith, the impedance of a capacitor to which currents concentrate increases and concurrently, the current amount decreases and therefore, the current balance in each of the elements can be stabilized without resort to complicated control and package structure.

In other words, according to the capacitor circuit 1 according to the present embodiment, by connecting in parallel the plurality of capacitors 2 each having the characteristics indicative of a reduction in electrostatic capacity in response to an increase in temperature, the impedance of a capacitor 2 to which currents concentrate can be increased and concurrently, the current amount can be decreased and therefore, the current balance in each of the elements can be stabilized without resort to complicated control and package structure.

## Claims

1. A capacitor circuit (1) wherein a plurality of capacitors (2) having identical normalized capacitance and each having an electrostatic capacity which decreases as the temperature rises (Fig. 1B) are connected in parallel.

2. The capacitor circuit according to claim 1, wherein when the temperature around the capacitor is high in an ambience in which the capacitor circuit (1) is installed, the capacitors are arranged thin and when the temperature around the capacitor is low in an ambience in which the capacitor circuit (1) is installed, the capacitors are arranged thick.

3. The power converter (100a; 100b; 100c) comprising a capacitor circuit (1) in which a plurality of capacitors (2) having identical normalized capacitance and each having an electrostatic capacity which decreases as the temperature rises are connected in parallel.

4. The power converter according to claim 3, wherein the capacitor is a DC capacitor (201) for smoothing ripples in current amount supplied from a DC power source (101).

5. The power converter according to claim 3, wherein the capacitor is a filter capacitor (202) adapted to impose band limitation.

6. The power converter according to claim 3, wherein the capacitor is a snubber capacitor (203) adapted to snub a transient high voltage generated during cutoff of current.

7. A method of charging and discharging by connecting in parallel a plurality of capacitors (2) having identical normalized capacitance and each having an electrostatic capacity which decreases as the temperature rises.
